Europäisches Patentamt

European Patent Office

Office européen des brevets

(19)

(11) Veröffentlichungsnummer: **0 161 581**
**B1**

(12)

# EUROPÄISCHE PATENTSCHRIFT

(45) Veröffentlichungstag der Patentschrift: **22.08.90**

(51) Int. Cl.⁵: **C 09 D 201/00, C 08 F 259/08**

(21) Anmeldenummer: **85105315.7**

(22) Anmeldetag: **02.05.85**

(54) **Verwendung von strahlenhärtbaren Lacken zur Herstellung von UEberzügen und Beschichtungen.**

(30) Priorität: **10.05.84 DE 3417263**

(43) Veröffentlichungstag der Anmeldung:
**21.11.85 Patentblatt 85/47**

(45) Bekanntmachung des Hinweises auf die
Patenterteilung:
**22.08.90 Patentblatt 90/34**

(84) Benannte Vertragsstaaten:
**AT BE CH DE FR GB IT LI NL SE**

(56) Entgegenhaltungen:
**US-A-4 371 657**
**US-A-4 416 941**
**US-A-4 430 418**

**DERWENT JAPANESE PATENT REPORT,
Zusammenfassung Nr. 83-47510K, Derwent
Publications Ltd, London, GB; & JP-A-58 058 180
(SUMITOMO METAL IND. K.K.) 06-04-1983**

(73) Patentinhaber: **BAYER AG**
**D-5090 Leverkusen 1 Bayerwerk (DE)**

(72) Erfinder: **Rehbein, Hans**
**Franz-Stollwerckstrasse 20**
**D-4150 Krefeld 11 (DE)**
Erfinder: **Margotte, Dieter, Dr.**
**Wedelstrasse 48**
**D-4150 Krefeld (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Description**

Die Erfindung betrifft die Verwendung von strahlenhärtbaren, farbton- und kreidungsstabilen Lacken auf Basis von (Meth)Acryloylgruppen enthaltenden Prepolymeren und copolymerisierbaren Vinylmonomeren und gegebenenfalls Pigmenten, Mattierungsmitteln und weiteren Hilfsstoffen, die durch einen Gehalt an fluorierten Polymeren gekennzeichnet sind, zur Beschichtung von gegebenenfalls grundierten porösen Formkörpern, insbesondere von organisch oder anorganisch gebundenen Faserplatten.

Es ist bekannt, (Meth)Acryloylgruppen enthaltende Prepolymere in Kombination mit reaktiven Verdünnern (copolymerisierbaren Vinylmonomeren) wie Mono-, Di- und Tri(Meth)Acrylaten von ein- und mehrwertigen Alkoholen durch Elektronenstrahlen zu härten (vgl. US—PS 3 770 602; DE—AS 20 03 820 = GB—PS 1 286 591; DE—AS 23 39 509 = US—PS 3 971 711; DE—AS 23 43 085 = US—PS 4 094 925; DE—OS 22 49 446 = US—PS 3 948 739; DE—OS 28 15 721 = US—PS 4 108 840).

Neben den bekannten Vorteilen, wie zum Beispiel Umweltfreundlichkeit, schnelle Härtungszeiten sowie gute Durchhärtung auch in dicken, gefüllten und pigmentierten Schichten, besteht bei der Elektronenstrahlhärtung ein gewisser Nachteil darin, daß die Aushärtung durch Luftsauerstoff inhibiert wird. Zur Vermeidung dieses Nachteils muß die Härtung unter Schutzgasatmosphäre (Stickstoff oder Kohlendioxid) durchgeführt werden.

Neuere Arbeiten haben sich damit befaßt, die Sauerstoffinhibierung durch Abdeckmittel zu reduzieren, so zum Beispiel die DE—OS 32 14 757, wo spezielle Wachsemulsionen als Abdeckmittel beschrieben werden.

Gegenstand der Erfindung ist die Verwendung von strahlenhärtbaren Lacken aus

a) (Meth)Acryloylgruppen enthaltenden Prepolymeren,

b) copolymerisierbaren Vinylmonomeren,

c) Fluoreinheiten enthaltenden Polymeren und gegebenenfalls

d) Pigmenten, Mattierungsmitteln und weiteren üblichen Hilfsstoffen, wobei die Polymeren c) in der Lackzusammensetzung a) bis d) in einer einem Fluorgehalt von 0,1 bis 9,5 Gew.-% entsprechenden Mengen enthalten sind, zur Herstellung von Überzügen und Beschichtungen von gegebenenfalls grundierten porösen Formkörpern, insbesondere von organisch und/oder anorganisch gebundenen Faserplatten.

Die strahlengehärteten Lacke der Erfindung sind weitgehend farbton- und kreidungsstabil und übertreffen diesbezüglich vergleichbare strahlengehärtete Lacke, die keinen Fluorgehalt aufweisen.

Strahlenhärtbare Lacke, die fluorhaltige Komponenten enthalten, sind zwar bereits in DERWENT JAPANESE PATENT REPORT, Zusammenfassung Nr. 83—47510k, Derwent Publications Ltd, London, GB, beschrieben, jedoch handelt es sich bei diesen Systemen offensichtlich um binäre Systeme aus den Einzelkomponenten (a) und (b) und nicht um System aus 3 oder 4 Komponenten (a), (b), (c) und gegebenenfalls (d) der erfindungsgemäßen Art, die im übrigen zur Beschichtung von Stahlrohren verwendet werden, was in keinen näheren Zusammenhang mit der erfindungsgemäßen Verwendung zur Beschichtung von porösen Substraten gebracht werden kann.

Die in den strahlungshärtbaren Lacken der Erfindung als Komponente a) enthaltenen (Meth)Acryloylgruppen enthaltenden Prepolymeren besitzen mindestens zwei (Meth)Acryloylgruppen, vorzugsweise zwei bis vier Acryloylgruppen, und leiten sich von Polyestern, Polyethern, Polyepoxidverbindungen, aliphatischen Polyolen, Polyurethanen und Vinylpolymerisaten ab. Derartige (Meth)Acrylatprepolymere sind bekannt und beispielsweise beschrieben in US—PS 2 101 107; 2 413 973; 2 951 758; 3 066 112; 3 301 743; 3 368 900; 3 380 831; 3 455 801; 3 469 982; 3 485 732; 3 530 100; 3 551 246; 3 552 986; 3 628 963; 3 660 145; 3 664 861; 3 689 610; 3 719 521; 3 732 107; 3 782 961; 3 840 369; 3 888 830; 4 033 920; 4 081 492; 4 206 025; GB—PS 1 006 587; 1 241 823; 1 241 824; 1 321 372; DE—OS 19 16 499 und 28 53 921.

Bevorzugte (Meth)Acrylatprepolymere sind Polyester(meth)acrylate, Polyepoxy(meth)acrylate und Polyurethan(meth)acrylate; besonders bevorzugt sind Polyurethan(meth)acrylate auf Basis aliphatischer und cycloaliphatischer Polyisocyanate bzw. Polyole.

Die (Meth)Acryloylgruppen enthaltenden Prepolymeren sind im Lack vorzugsweise zu 19 bis 35 Gew.-%, insbesondere zu 24 bis 31 Gew.-%, bezogen auf Summe der Komponenten a, b und c, enthalten.

Als copolymerisierbare Vinylmonomere b) oder Mischungen dieser Monomeren, die als Verdünnungsmittel für das Prepolymere und/oder zur Variation der mechanischen Eigenschaften der ausgehärteten Lacke dienen, sind beispielsweise Acryl- bzw. Methacrylsäureester, vorzugsweise von ein- bis dreiwertigen aliphatischen Alkoholen oder von deren Oxalkylierungsprodukten, insbesondere von deren Oxethylierungsprodukten. Im Falle der Oxalkylierungsprodukte sind auf 1 Hydroxylgruppe des jeweiligen ein- oder mehrwertigen Alkohols durchschnittlich 0,8 bis 4 Mol Alkylenoxid, wie Ethylenoxid oder Propylenoxid, vorzugsweise Ethylenoxid, angelagert worden.

Besonders bevorzugt sind als reaktive strahlenhärtbare Monomere die Acrylate der zwei- und dreiwertigen Alkohole bzw. ihrer Oxethylierungsprodukte.

Namentlich seien beispielhaft genannt: Ethylenglykoldi(meth)acrylat, Di(meth)acrylate des Diethylenglykols, Triethylenglykols, Tetraethylenglykols und Pentaethylenglykols; Propylenglykol-di(meth)acrylat; Di(meth)acrylate des Di- bis Pentapropylenglykols; Neopentyl-di(meth)acrylat; Butandiol-

2

1,4-di(meth)acrylat; Hexandiol-1,6-di(meth)acrylat; Trimethylolpropan-tri(meth)acrylat, Triacrylate des oxethylierten Trimethylolpropans mit einem Oxethylierungsgrad von 2,5 bis 4 gemäß DE—PS 2 651 507, insbesondere Hexandiol-1,6-diacrylat.

Die Vinylmonomeren b) sind in der Lackzusammensetzung vorzugsweise in Mengen von 50 bis 80 Gew.-%, insbesondere von 60 bis 71 Gew.-%, bezogen auf Summe der Komponenten a, b und c, enthalten.

Die in den erfindungsgemäßen Lacken enthaltenen Polymeren mit einem Fluorgehalt von 7 bis 76 Gew.-%, vorzugsweise 7 bis 60 Gew.-%, sind vorzugsweise Wachse von Homopolymerisaten von Fluorolefinen mit 2—4 C-Atomen wie Tetrafluorethylen, Trifluorethylen, Vinylfuorid, Vinylidenfluorid, Hexafluorpropylen, Hexafluorbutylen und Copolymerisate der vorgenannten Fluorolefine aus verschiedenen Fluorolefinen oder aus Fluorolefinen und Olefinen wie Ethylen (vgl. Ullmanns Encyklopädie der technischen Chemie, 4. Auflage, 1980, Bd. 19, Seiten 89—106). Die Fluor enthaltenden Polymeren sind in den Lacken in Mengen von 1 bis 15 Gew.-%, bezogen auf Summe der Komponenten a, b und c, enthalten.

Bezogen auf Summe der Komponenten a, b und c, können im Lack 10 bis 60 Gew.-%, vorzugsweise 15 bis 50 Gew.-%, am Weiß- und/oder Buntpigmenten enthalten sein. Beispielhaft seien genannt: Titandioxid, Eisenoxide, Chromoxid, Antimonoxid, Mischoxide des Cobalts/Nickels und Mangans, Chromate wie Blei- oder Strontiumchromat, Mennige, Phthalocyaninpigmente, Aluminium- und Kupferbronzen.

Als Mattierungsmittel, die im Lack in Mengen von 10 bis 25 Gew.-%, vorzugsweise 15 bis 20 Gew.-%, stets bezogen auf Summe der Komponenten a, b und c, vorhanden sein können, seien beispielhaft genannt: hochdisperse Kieselsäuren.

Weiter können im Lack als Hilfsstoffe 0,1 bis 5 Gew.-%, bezogen auf Summe der Komponenten a, b und c, an Antiabsetzmittel vorhanden sein, beispielsweise Dimethylstearylamin, Distearylamin, Stearinsäure, Metallstearate ein- bis dreiwertiger Metalle, Stearylalkohol, die entsprechenden Oleylderivate, aufgeschlossene Asbestfasern, chemisch modifizierte Montmorillonite, aber auch sehr feinteilige Füllstoffe (Korngröße 20 µm) wie Schwerspat, Kreide, Gips, Talkum und Kaolin.

Außerdem können als Hilfsstoffe 0,001 bis 0,1 Gew.-%, bezogen auf Summe der Komponenten a, b und c, an üblichen Polymerisationsinhibitoren oder Antioxidantien im Lack enthalten sein. Derartige Verbindungen sind beispielsweise:

4,4'-Bis-(2,6-di-tert.-butylphenol),
1,3,5-Trimethyl-2,4,6-tris-(3,5-di-tert.-butyl-4-hydroxy-benzyl)-benzol,
4,4'-Butyliden-bis-(6-tert.-butyl-m-kresol),
3,5-Di-tert.-butyl-4-hydroxybenzylphosphonsäurediethylester,
N,N'-Bis-(β-naphthyl)-p-phenylendiamin,
N,N'-Bis-(1-methylheptyl)-p-phenylendiamin,
Phenyl-β-naphthylamin,
4,4'-Bis-(α,α-dimethylbenzyl)-diphenylamin,
1,3,5-Tris-(3,5-di-tert.-butyl-4-hydroxyhydrocinnamoyl)hexahydro-s-triazin,
Hydrochinon, p-Benzochinon, Hydrochinonmonomethylether,
2,5-Di-tert.-butylchinon, Toluhydrochinon,
p-tert.-Butylbrenzcatechin,
3-Methylbrenzcatechin, 4-Ethylbrenzcatechin,
Chloranil, Naphthochinon, Kupfernaphthenat,
Kupferoctoat, Cu(I)Cl/Triphenylphosphit,
Cu(I)Cl/Trimethylphosphit,
Cu(I)Cl/Trischlorethyl-phosphit,
Cu(I)Cl/Tripropylphosphit,
p-Nitrosodimethylanilin.

Darüber hinaus kann der Lack Verlaufmittel (z.B. Celluloseester, Oligoacrylate, Siliconöle), lösliche Farbstoffe, UV-Absorber (z.B. Benztriazolderivate gemäß US—PS 3 189 615 oder Benzophenon gemäß US—PS 3 043 709, 3 049 443, 2 693 492, 2 853 521 und 2 777 828) sowie Quencher und Radikalfänger (z.B. sterisch gehinderte Amine gemäß DE—OS 24 17 535 und 24 56 864) in den üblichen Mengen enthalten.

Die erfindungsgemäßen Lackformulierungen können in allen in der Lackindustrie üblichen Mischaggregaten hergestellt und mit allen üblichen Auftragsmaschinen verarbeitet werden. Eine bevorzugte Ausführungsform besteht darin, daß das Fluor enthaltende Polymere gemeinsam mit dem Mattierungsmittel dispergiert wird.

Der Auftrag des Lacks kann diskontinuierlich erfolgen, vorzugsweise jedoch mittels kontinuierlich arbeitenden Walzlackier- oder Gießlackiermaschinen. Die Dicke der einzelnen nassen Lackschicht beträgt 30 bis 100 µm, entsprechend 30—100 g/m$^2$.

Die Härtung erfolgt vorzugsweise mittels ionisierender Strahlung in einem Inertgas, vorzugsweise durch Elektronenstrahlen. Obwohl die Härtung mit einer Strahlendosis von etwa 1 bis ca. 20 Megarad (Mrad) ausgeführt werden kann, bevorzugt man aus wirtschaftlichen Gründen kontinuierlich arbeitende Beschichtungsanlagen, deren Strahlungsquellen eine Beschleunigerspannung von 150 bis 500 Kilo-Volt (kV) und Stromstärken von 5 bis zu 80 Milli-Ampère (mA) aufweisen. Der Abstand der Elektronenstrahlenquelle von der zu härtenden Schicht beträgt üblicherweise 10 bis 20 cm. Die mit solchen Anlagen erreichbare Strahlendosis liegt bei 1 bis 50 Mrad.

Die strahlenhärtbaren Lacke gemäß der vorliegenden Erfindung können unter anderem zur Beschichgung von organisch und anorganisch gebundenen Faserplatten eingesetzt werden, wie zum Beispiel von Spanplatten, Hartfaserplatten, Holzzementplatten, asbesthaltigen oder asbestfreien Zementplatten, die sowohl im Innen- als auch Außenbereich der Bautechnik eingesetzt werden. Vorzugsweise sind diese Beschichtungen pigmentiert eingestellt, um den Substraten eine dekorative Schutzlackierung zu verleihen.

Die in dem nachfolgenden experimentellen Teil angegebenen Teile und Prozentangaben beziehen sich auf das Gewicht.

## Experimenteller Teil

Urethanacrylatprepolymerer gemäß Europäischem Patent Nr. 0 000 890 = US-Patent 4 225 695

29,99 Tl. Isophorondiisocyanat werden vorgelegt und unter Kühlen und Rühren innerhalb von 2 h 2,15 Tle Thiodiglykol zudosiert, wobei die Temperatur von 60°C nicht überschritten werden sollte. Anschließend werden unter Überleiten von Luft und nach Zugabe von 0,09 Tl. Zinn-II-2-ethylhexoat sowie 0,01 Tl. Di-tert.-butylhydrochinon, 12,55 Tle 2-Hydroxyethylacrylat zudosiert, wobei die Temperatur von 65°C nicht überschritten werden sollte. Nach Erreichen des NCO-Wertes von ca. 14% nach ca. 4 h werden 30,24 Tle oxethyliertes Trimethylolpropan (TMP) aus 1 Mol TMP und 12 Mol Ethylenoxid zudosiert, wobei 60°C nicht überschritten werden sollen. Unter Überleiten trockener Luft wird so lange bei 60°C gerührt, bis der NCO-Wert 0,1% ist. Es wird ein farb- und geruchloses Harz (Urethanacrylatprepolymer A) erhalten, das in 25 Tle Hexandiol-1,6-diacrylat gelöst wird.

Zur Erläuterung des Erfindungsgegenstandes werden ein $TiO_2$-haltiger Weißlack (Beispiele 1—4) und ein $TiO_2$-freier Lack in braun (Beispiele 5—9) untersucht. Die Beispiele 1 und 5 sind jeweils Vergleichsbeispiele (vgl. Tabelle 1).

Der Lack wird in folgender Weise hergestellt:

### 1. *Mattpaste*

25 Gew.-Tle. Urethanacrylatprepolymer A, 180 Gew.-Tle 1,6-Hexandioldiacrylat, 60 Gew.-Tle. Mattierungsmittel (hochdisperse Kieselsäure), × Gew.-Tle. Tetrafluorethylen/Ethylencopolymerisat-Wachs (siehe Tabelle 1) werden in einem Dissolver dispergiert.

### 2. *Farbpaste*

75 Gew.-Tle. Prepolymer, 30 Gew.-Tle. 1,6-Hexandioldiacrylat sowie die in Tabelle 1 angegebenen Pigmente werden auf einer Dreiwalze angerieben. Da die Konsistenz sehr stark abhängt von der Art der Pigmentierung, kann diese mit Hexandioldiacrylat eingestellt werden (siehe Auflackung).

### 3. *Auflackung*

Die gesamten Mengen an Matt- bzw. Farbpaste werden mittels eines Dissolvers dispergiert. Die Einstellung der Verarbeitungsviskosität (4,0—4,5 Pa.s) erfolgt durch Zugabe von 1,6-Hexandioldiacrylat.

TABELLE 1

| Beispiele | 1 (Vergleich) | 2 | 3 | 4 | 5 (Vergleich) | 6 | 7 | 8 | 9 |
|---|---|---|---|---|---|---|---|---|---|
| Prepolymer (Gew.-Tle) | 100 | 100 | 100 | 100 | 100 | 100 | 100 | 100 | 100 |
| 1,6-Hexandioldiacrylate (Gew.-Tle) | 200 | 200 | 200 | 200 | 250 | 250 | 250 | 250 | 250 |
| PE-Wachs[1] (Gew.-Tle) | 30 | — | — | — | — | — | — | — | — |
| PTFF/PE-Wachs[2] (Gew.-Tle) | — | 30 | 20 | — | | 30 | 12 | 60 | — |
| PVDF-Wachs[3] (Gew.-Tle) | — | — | — | 4 | — | — | — | — | — |
| Titandioxid (Gew.-Tle) | 150 | 150 | 150 | 150 | — | — | — | — | — |
| Eisenoxidgelb (Gew.-Tle) | — | — | — | — | 50 | 50 | 50 | 50 | 50 |
| Eisenoxidrot (Gew.-Tle) | — | — | — | — | 30 | 30 | 30 | 30 | 30 |
| Rußpigment (Gew.-Tle) | — | — | — | — | 5 | 5 | 5 | 5 | 5 |
| Mattierungsmittel (Gew.-Tle) | 60 | 60 | 60 | 60 | 60 | 60 | 60 | 60 | 60 |
| Gew.-% Fluor im Lack | — | 0,39 | 0,26 | 0,46 | — | 0,40 | 0,17 | 0,77 | 0,42 |

[1] = Polyethylenwachs
[2] = Tetrafluorethylen/Ethylencopolymerisat mit 7 Gew.-% eingebautem Fluor
[3] = Polyvinylidenfluorid mit 59 Gew.-% eingebautem Fluor

Lackauftrag und Härtung sowie Prüfung

Die Formulierungen aus den Beispielen 1—9 wurden auf grundierten Holzzementplatten in einer Schichtstärke von 50 μm (= 50 g/m$^2$) aufgewalzt.

Die Härtung erfolgte mittels Elektronenstrahlen unter Inertgas bei 5 Mrad (Bandgeschwindigkeit 20 m pro Minute).

Die lackierten Muster wurden im Kohlebogen Weather-Ometer nach DIN 53 231 V (Zyklus 17 min Trockenperiode, 3 min Besprühungsperiode, Dauerlicht) kurzbewittert. Die Kreidung wurde nach DIN 53 223 (Tesafilmmethode) und die Farbtonabweichung über Elrephomat DIN 6174 in Form von Cielab-Werten bestimmt.

Die Ergebnisse der Messungen sind in Tabelle 2 zusammengestellt.

TABELLE 2

| Beispiele | 1 (Vergl.) | | 2 | | 3 | | 4 | | 5 (Vergl.) | | 6 | | 7 | | 8 | | 9 | |
|---|---|---|---|---|---|---|---|---|---|---|---|---|---|---|---|---|---|---|
| Bewitterungszeit in Std. | A | B | A | B | A | B | A | B | A | B | A | B | A | B | A | B | A | B |
| 500 | 0,8 | 0 | 0,8 | 0 | 0,8 | 0 | 0,8 | 0 | 0,6 | 0 | 0,4 | 0 | 0,2 | 0 | 0 | 0 | 0,4 | 0 |
| 750 | 0,8 | 0 | 0,8 | 0 | 0,8 | 0 | 0,8 | 0 | 0,6 | 0 | 0,3 | 0 | 0,2 | 0 | 0 | 0 | 0,4 | 0 |
| 1000 | 0,8 | 0—1 | 0,8 | 0 | 0,8 | 0 | 0,8 | 0 | 2,0 | 0 | 0,6 | 0 | 0,2 | 0 | 0,5 | 0 | 0,5 | 0 |
| 1250 | 0,9 | 1 | 0,8 | 0 | | | 0,8 | 0 | 3,1 | 0—1 | 0,9 | 0 | 0,7 | 0 | 0,5 | 0 | 0,8 | 0 |
| 1500 | 1,2 | 2 | 0,8 | 0 | 0,8 | 0—1 | 0,8 | 0 | 5,3 | 1 | 1,7 | 0 | 1,6 | 0 | 0,9 | 0 | 1,5 | 0 |
| 1750 | 1,2 | 2 | 0,8 | 0,1 | | 1 | 0,8 | 0 | 5,9 | 1—2 | 2,3 | 0 | 2,1 | 0—1 | 1,9 | 0 | 2,0 | 0 |
| 2000 | 1,3 | 2—3 | 0,9 | 1 | 0,1 | 2 | 0,8 | 0—1 | 7,1 | 3 | 3,6 | 0—1 | 3,4 | 0—1 | 3,3 | 0—1 | 3,4 | 0 |
| 2250 | 1,3 | 2—3 | 0,9 | 1 | 0,9 | 2 | 0,9 | 1 | | | 3,6 | 1 | 3,9 | 0—1 | 3,6 | 1 | 3,5 | 1 |

A = Farbtonabweichung nach DIN 6175 ($\Delta E$); B Kreidung nach DIN 53 223

Wie aus der Tabelle 2 ersichtlich, zeigen die erfindungsgemäßen Lacke gegenüber solchen des Standes der Technik (Beispiele 1 und 5) eine wesentlich geringere Farbtonabweichung und Kreidung.

EP 0 161 581 B1

# EP 0 161 581 B1

**Patentansprüche**

1. Verwendung von strahlenhärtbaren Lacken aus
a) (Meth)Acryloylgruppen enthaltenden Prepolymeren,
b) copolymerisierbaren Vinylmonomeren,
c) Fluoreinheiten enthaltenden Polymeren und gegebenenfalls
d) Pigmenten, Mattierungsmitteln und weiteren üblichen Hilfsstoffen,
wobei die Polymeren c) in der Lackzusammensetzung a) bis d) in einer einem Fluorgehalt von 0,1 bis 9,5 Gew.-% entsprechenden Mengen enthalten sind, zur Herstellung von Überzügen und Beschichtungen von gegebenenfalls grundierten porösen Formkörpern.

2. Verwendung der strahlenhärtbaren Lacke gemäß Anspruch 1, dadurch gekennzeichnet, daß die Formkörper organisch und/oder anorganisch gebundene Faserplatten sind.

**Revendications**

1. Utilisation de laques, peintures ou vernis durcissables par rayonnement constituées
a) de prépolymères contenant des groupes (méth)acryloyle,
b) de monomères de vinyle copolymérisables,
c) de polymères contenant des unités de fluor, et éventuellement
d) de pigments, agents de matage et d'autres substances auxiliaires habituelles,
les polymères c) étant contenus dans la composition de laque a) à d) en une quantité correspondant à une teneur en fluor de 0,1 à 9,5% en poids, pour la préparation de couches de recouvrement et d'enductions de corps poreux façonnés éventuellement enduits d'une couche de fond.

2. Utilisation des laques, peintures ou vernis durcissables par rayonnement selon la revendication 1, caractérisée en ce que les corps façonnés sont des panneaux de fibres agglomérées organiquement et/ou inorganiquement.

**Claims**

1. The use of radiation-curable paints of
a) prepolymers containing (meth)acryloyl groups,
b) copolymerizable vinyl monomers,
c) polymers containing fluorine units and optionally
d) pigments, flatting agents and other standard auxiliaries,
the polymers c) being present in the paint composition a) to d) in quantities corresponding to a fluorine content of 0.1 to 9.5% by weight, for the production of coatings on optionally primed porous mouldings.

2. The use of the radiation-curable paints claimed in claim 1, characterized in that the mouldings are organically and/or inorganically bonded fiber boards.